Europäisches Patentamt

European Patent Office

Office européen des brevets

(19)

(11) Veröffentlichungsnummer: **0 340 615**
**B1**

(12) **EUROPÄISCHE PATENTSCHRIFT**

(45) Veröffentlichungstag der Patentschrift:
**19.12.90**

(21) Anmeldenummer: **89107532.7**

(22) Anmeldetag: **26.04.89**

(51) Int. Cl.⁵: **A01C 23/04, B05B 3/14**

(54) **Gülleverteilvorrichtung.**

(30) Priorität: **30.04.88 DE 8805775 U**

(43) Veröffentlichungstag der Anmeldung:
**08.11.89 Patentblatt 89/45**

(45) Bekanntmachung des Hinweises auf die Patenterteilung:
**19.12.90 Patentblatt 90/51**

(84) Benannte Vertragsstaaten:
**AT BE CH DE FR GB IT LI LU**

(56) Entgegenhaltungen:
**BE-A- 692 455**
**DE-A- 1 607 366**
**DE-A- 3 307 483**
**DE-A- 3 411 172**
**FR-A- 2 312 285**

(73) Patentinhaber: **M. HÜTTEMANN GMBH & Co. KG,
Industriestrasse 8, D-4800 Bielefeld 11(DE)**

(72) Erfinder: **Maier, Alois, Bergerhausen 3,
D-8948 Mindelheim(DE)**

(74) Vertreter: **Kahler, Kurt, Dipl.-Ing., Patentanwälte Kahler
& Käck Gerberstrasse 3 Postfach 1249,
D-8948 Mindelheim(DE)**

ACTORUM AG

## Beschreibung

Die Erfindung bezieht sich auf eine Gülleverteilvorrichtung mit einem, um eine etwa vertikale Achse hin- und herschwenkbaren Verteilteller, der den Güllestrahl nach rückwärts umlenkt und flach ausbreitet, sowie einer etwa vertikal nach oben gerichteten Auslaßdüse, die über einen Krümmer an einen rückseitigen Anschlußstutzen eines Tankwagens ankuppelbar ist, und einem Rahmen, der an der Auslaßdüse befestigt ist und entlang einer die Auslaßdüse beinhaltenden in Fahrtrichtung verlaufenden Achse ausgerichtet ist.

Eine derartige Gülleverteilvorrichtung ist aus der DE-PS 35 13 647 bekannt, die durch einen Leitkörper am Verteilteller vom Güllestrahl selbst angetrieben ist und mittels eines Umschaltmechanismus ständig eine hin- und hergehende Schwenkbewegung ausführen soll. Problematisch ist hierbei jedoch die Startphase des Gülleverteilers insbesondere bei Hanglagen, wobei infolge des Eigengewichtes der Verteilteller das zum Hin- und Herschwenken nötige Drehmoment u. U. nicht aufgebracht werden kann. Entsprechendes gilt bei Druckschwankungen des Güllestrahls oder bei Stoßbelastungen z.B. durch Schlaglöcher, so daß die geforderte Verteilbreite und -genauigkeit nicht bei allen in der Landwirtschaft üblichen Einsatzbedingungen gegeben ist.

Desweiteren sind zwangsläufige, motorische Antriebe aus der DE-OS 32 08 799 bekannt, bei der jedoch eine hochliegende Schwenkdüse hin- und herbewegt wird und ein relativ stark gebündelter Güllestrahl erzeugt wird. Diese Anordnung erfordert aufwendige Rohrleitungen und einen sehr großbauenden Kurbeltrieb mit Zahnstangenübertragung, so daß diese Lösung für die üblichen Gülletankwagen mit unterliegender Auslaßöffnung aus Platz- und Kostengründen nicht in Frage kommt.

Außerdem ist aus der CH-PS 604 475 eine per Kurbeltrieb hin- und herschwenkbare Gülleverteileinrichtung bekannt, die von der Zapfwelle des Traktors angetrieben wird. Dieser Antrieb ist ebenfalls sehr aufwendig. Zudem ist von Nachteil, daß als Eigenart des in einer vertikalen Ebene umlaufenden Kurbeltriebes, die Schwenkgeschwindigkeit in der Mitte sehr schnell und in den seitlichen Umkehrstellungen relativ langsam ist, so daß die Gülle unregelmäßig verteilt wird. Die vorgeschlagene Lösung zur Behebung dieses Nachteils, indem die Schwenkachse vertikal geneigt ist, liefert jedoch den Nachteil, daß der Abstand zwischen Boden und Gülleverteilorgan stark differiert und sich somit wiederum Verteilunregelmäßigkeiten ergeben.

Demzufolge liegt der Erfindung die Aufgabe zugrunde, eine Gülleverteilvorrichtung der genannten Art zu schaffen, die einfach aufgebaut ist und unter allen Einsatzbedingungen eine hohe Verteilgenauigkeit erreicht.

Diese Aufgabe wird dadurch gelöst, daß der Verteilteller durch einen Antriebsmotor über eine in horizontaler Ebene umlaufenden Kurbelschwinge mit Kurbel, Koppel und Schwinge antreibbar ist und der Antriebsmotor seitlich von der die Auslaßdüse beinhaltenden in Fahrtrichtung verlaufenden Achse angeordnet ist.

Durch den Antriebsmotor wird ein sicherer Schwenkbetrieb des Verteilertellers und regelmäßige Verteilung bei allen Einsatzbedingungen wie Hanglagen, nachlassender Strahldruck z.B. gegen Ende des Ausbringvorganges, Schlaglöcher usw. erreicht. Durch die seitliche Anordnung des Antriebsmotors bzw. der Kurbeldrehachse der in horizontaler Ebene umlaufenden Kurbelschwinge wird der ansonsten starke Unterschied zwischen mittlerer und Rand - Schwenkgeschwindigkeit (Winkelgeschwindigkeit der den Verteilteller schwenkenden Schwinge) weitgehend vergleichmäßigt. Die gesamte Antriebsanordnung ist relativ kompakt und durch einfache Bauteile, wie Kurbelarme gegenüber Zahnstangen oder Zahnrädern, kostengünstig herzustellen. Damit eignet sich diese Lösung auch zum Nachrüsten an bestehenden Tankwagen, ohne daß größere Umbauarbeiten nötig wären.

Vorteilhafte Ausgestaltungen, wie die Wahl der Schwingenlänge zwischen Kurbel- bzw. Koppellänge oder der seitliche Versatz des Motors unter einem Winkel von 30° zur Längsachse, sind Gegenstand der Unteransprüche.

Ein Ausführungsbeispiel ist in der Zeichnung dargestellt und wird nachfolgend beschrieben. Es zeigt

Fig. 1 eine perspektivische Darstellung der Gülleverteilvorrichtung;
Fig. 2 eine Draufsicht gemäß Fig. 1.

Ein Gülletankwagen 1 ist hier teilweise angedeutet, an dessen rückseitigen Anschlußstutzen 2 ein Krümmer 3 und eine Auslaßdüse anschließbar ist. Diese lenkt den Güllestrahl auf einen schaufelartigen Verteilerteller 5. An der Düse 4 ist ein Rahmen 6 befestigt, der den Antriebsmotor, hier ein Elektromotor, trägt.

Dieser ist mit einer Steckdose des Traktorbordnetzes verbindbar. Entsprechendes gilt für einen Hydraulikmotor mit Ankupplung an die Hydraulikanlage. Der Antriebsmotor 7 treibt eine Kurbel 8 mit konstanter Winkelgeschwindigkeit an, die wiederum über eine gelenkig verbundene Koppel 9 eine Schwinge 10 antreibt und damit den am Rahmen 6 gelagerten Verteilteller 5 hin- und herschwenkt. Durch diese kompakte Ausführung ist die gesamte Anordnung am Heck des Tankwagens einfach ankuppelbar.

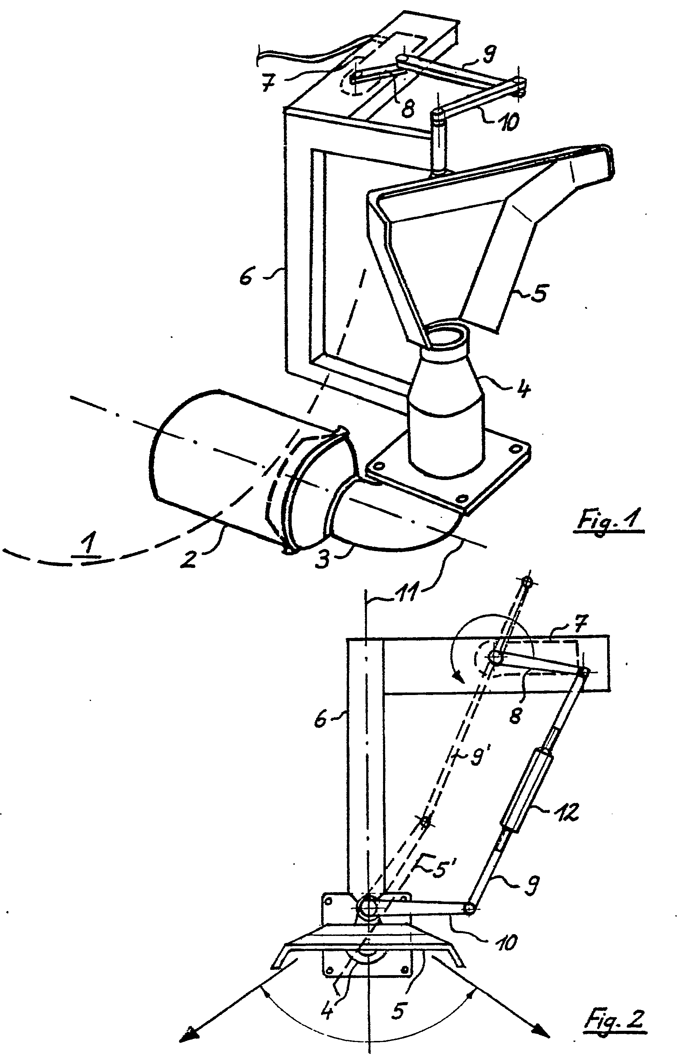

Fig. 2 zeigt in Draufsicht die Kurbelschleifenanordnung mit dem seitlich von der Längsachse 11 des Tankwagens 1 und der mittigen Düse 4 angeordneten Antriebsmotor 7 bzw. Drehpunkt der Kurbel 8. Wie ersichtlich ist die Länge der Kurbel 8 kleiner als die der Schwinge 10 und diese wiederum kleiner als die Koppel 9. Die Länge der Koppel 9 ist dabei zur Verstellung der gewünschten Verteilbreite bzw. des Schwenkwinkels z.B. mittels eines Spann-Schlosses 12 einfach veränderbar. In der gestrichelt eingezeichneten Decklage von Kurbel 8 und Koppel 9 zeigen diese auf den Drehpunkt des Verteiltellers 5, wobei die in Fahrtrichtung rechte Umkehrstellung erreicht ist. Durch diese spezielle, durch den seitlichen Versatz bestimmten Anordnung ergibt sich in den Umkehrstellungen eine relativ hohe Winkelgeschwindigkeit, so daß die Schwenkgeschwindigkeit des Verteiltellers 5 über den gesamten Schwenkbereich nahezu konstant ist. Dieser seitliche Versatz des Kurbeldrehpunktes in der horizontalen Umlaufebene, insbesondere unter etwa 30° zur Längsachse 11, ermöglicht somit die angestrebte Verteilgenauigkeit.

**Patentansprüche**

1. Gülleverteilvorrichtung mit einem, um eine etwa vertikale Achse hin- und herschwenkbaren Verteilteller (5), der den Güllestrahl nach rückwärts umlenkt und flach ausbreitet, sowie einer etwa vertikal nach oben gerichteten Auslaßdüse (4), die über einen Krümmer (3) an einen rückseitigen Anschlußstutzen (2) eines Tankwagens (1) ankuppelbar ist, und einem Rahmen (6), der an der Auslaßdüse (4) befestigt ist und entlang einer die Auslaßdüse (4) beinhaltenden in Fahrtrichtung verlaufenden Achse (11) ausgerichtet ist, dadurch gekennzeichnet, daß der Verteilteller (5) durch einen Antriebsmotor (7) über eine in horizontaler Ebene umlaufende Kurbelschwinge (8, 9, 10) mit Kurbel (8), Koppel (9), Schwinge (10) antreibbar ist, wobei der Antriebsmotor (7) seitlich von der Achse (11) am Rahmen (6) angeordnet ist.

2. Gülleverteilvorrichtung nach Anspruch 1, dadurch gekennzeichnet, daß die Länge der Schwinge (10) größer als die Länge der Kurbel (8) und kleiner als die Länge der Koppel (9) ist.

3. Gülleverteilungsvorrichtung nach Anspruch 1, dadurch gekennzeichnet, daß die Drehachse des Antriebsmotors (7) in der horizontalen Ebene in Bezug zur Auslaßdüse (4) unter einem Winkel von 15 – 45°, bevorzugt etwa 30°, zur Längsachse (11) angeordnet ist.

4. Gülleverteilvorrichtung nach Anspruch 1, dadurch gekennzeichnet, daß der Antriebsmotor (7) ein Elektromotor ist, der mit dem Bordnetz eines Traktors verbindbar ist.

5. Gülleverteilvorrichtung nach Anspruch 1, dadurch gekennzeichnet, daß die Koppel (9) längenverstellbar ist, insbesondere durch ein Spannschloß (12).

6. Gülleverteilvorrichtung nach Anspruch 1, dadurch gekennzeichnet, daß in einer Umkehrstellung des Verteiltellers (5) die Teile der Kurbelschwinge (8, 9, 10) eine nahezu gestreckte Lage zueinander aufweisen.

**Revendications**

1. Dispositif de distribution de purin, comprenant un plateau distributeur (5) qui peut pivoter en va-et-vient autour d'un axe à peu près vertical et qui dévie le jet de purin vers l'arrière en l'élargissant à plat, ainsi qu'une buse de sortie (4) qui est dirigée vers le haut de manière à peu près verticale et qui peut être accouplée par l'intermédiaire d'un tuyau coudé (3) à une tubulure de raccordement arrière (2) d'un véhicule-citerne (1), et qu'un cadre (6) qui est fixé sur la buse de sortie (4) et qui est dirigé le long d'un axe (11) contenant la buse de sortie (4) et s'étendant dans la direction de la marche, caractérisé par le fait que le plateau distributeur (5) peut être entraîné par un moteur d'entraînement (7) par l'intermédiaire d'un mécanisme à manivelle oscillante (8, 9, 10) qui tourne dans un plan horizontal et qui comprend une manivelle (8), une bielle (9) et une manivelle oscillante (10), le moteur d'entrainement (7) étant disposé sur le cadre (6), latéralement par rapport à l'axe (11).

2. Dispositif de distribution de purin selon la revendication 1, caractérisé par le fait que la longueur de la manivelle oscillante (10) est supérieure à la longueur de la manivelle (8) et inférieure à la longueur de la bielle (9).

3. Dispositif de distribution de purin selon la revendication 1, caractérisé par le fait que l'axe de rotation du moteur d'entraînement (7) dans le plan horizontal, rapporté à la buse de sortie (4), est disposé sous un angle de 15–45°, de préférence de 30° environ, par rapport à l'axe longitudinal (11).

4. Dispositif de distribution de purin selon la revendication 1, caractérisé par le fait que le moteur d'entraînement (7) est un moteur électrique qui peut être relié au réseau de bord d'un tracteur.

5. Dispositif de distribution de purin selon la revendication 1, caractérisé par le fait que la bielle (9) est réglable en longueur, en particulier grâce à un tendeur (12).

6. Dispositif de distribution de purin selon la revendication 1, caractérisé par le fait que, dans une position de renversement de marche du plateau distributeur (5), les parties constitutives du mécanisme à manivelle oscillante (8, 9, 10) présentent une position où elles sont à peu près alignées l'une sur l'autre.

**Claims**

1. Apparatus for spraying liquid manure including a distributing plate (5) pivotable laterally left and right about an essentially vertical axis and deflecting the manure beam backward and flatly distributing thereof, an essentially vertically upward directed outlet nozzle (4) adapted to be coupled via a knee element (3) to a rear connecting muff (2) of a tank lorry (1), and a frame (6) fixed to the outlet nozzle (4) and aligned to an axis (11) extending in driving direction and including said outlet nozzle (4), characterized in that the distributing plate (5) is adapted to be driven by a driving motor (7) through a crank mechanism (8, 9, 10) rotating in a horizontal plane and comprising a crank (8), a coupling link (9), a rocker (10), the driving motor (7) being mounted at the frame (6) sideward of the axis (11).

2. Apparatus for spraying liquid manure of claim 1, characterized in that the length of the rocker (10) is larger than the length of the crank (8) and smaller than the length of the coupling link (9).

3. Apparatus for spraying liquid manure of claim 1, characterized in that the rotational axis of the driving motor (7) is arranged in a horizontal plane in respect of the outlet nozzle (4) at an angle of 15 –

45°, preferably about 30° in respect to the longitudinal axis (11) of the tank lorry (1).

4. Apparatus for spraying liquid manure of claim 1, characterized in that the driving motor (7) is an electromotor connectable to the power supply of a tractor.

5. Apparatus for spraying liquid manure of claim 1, characterized in that the coupling link (9) is adjustable in length in particular by a turn buckle (12).

6. Apparatus for spraying liquid manure of claim 1, characterized in that in an end position of the distribution plate (5) the elements of the crank mechanism (8, 9, 10) are in an almost straightened position to each other.

*Fig. 1*

*Fig. 2*